(19) Europäisches Patentamt
European Patent Office
Office européen des brevets

(11) Publication number: **0 159 886 B1**

(12) **EUROPEAN PATENT SPECIFICATION**

(45) Date of publication of patent specification: **25.03.92**

(51) Int. Cl.5: **C09J 129/04**, C09J 197/00, C08L 29/04, C08L 97/00

(21) Application number: **85302601.1**

(22) Date of filing: **15.04.85**

(54) **A polyvinyl alcohol and lignin sulphonate based adhesive composition.**

(30) Priority: **16.04.84 US 600400**

(43) Date of publication of application:
**30.10.85 Bulletin 85/44**

(45) Publication of the grant of the patent:
**25.03.92 Bulletin 92/13**

(84) Designated Contracting States:
**BE DE FR GB IT NL**

(56) References cited:
**US-A- 2 443 889**

(73) Proprietor: **H.B. FULLER COMPANY**
**2400 Energy Park Drive**
**St. Paul Minnesota 55108(US)**

(72) Inventor: **Hume III, Robert M.**
**7171 Ivystone Avenue S.**
**Cottage Grove Minnesota 55016(US)**
Inventor: **LaBrash, Robert A.**
**2590 Cohansey**
**Roseville Minnesota 55113(US)**
Inventor: **Vander Giessen, Michael J.**
**65 117th Avenue N.E.**
**Blaine Minnesota 55434(US)**

(74) Representative: **Silverman, Warren et al**
**HASELTINE LAKE & CO. Hazlitt House 28**
**Southampton Buildings Chancery Lane**
**London WC2A 1AT(GB)**

EP 0 159 886 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to aqueous adhesive compositions based on a polyvinyl alcohol and a lignin sulphonate.

In many manufacturing processes, adhesives having high tack, an extended open time, pot stability, and dimensional and biological stability after use are needed. Such adhesives are specifically needed in the manufacture of books such as catalogues or paper covered books. During their manufacture, two or more preliminary page assemblies or signatures, which include approximately 10 to 40 pages, are brought together in a first step. The signatures are then clamped and held, stacked, rough cut to form the shape of the book, and a small film of primer is applied to the signature backs. The primer provides a surface that can readily accept additional adhesives used in book assembly and can also act in providing a flexible hinge-like film on the spine of the book. The primer is dried and a pick up adhesive is applied to the dry primer film. The pick up adhesive must have sufficient open time and rapid tack such that a light contact between the adhesive and the cover is sufficient to bond the cover initially to the signature back with sufficient integrity such that the cover remains in place without additional attachment means until the book can be finished in subsequent manufacturing stages in which the cover can be crimped and trimmed, completing the manufacture.

In the manufacture of hard cover books, cover materials, generally fabric or coated fabric, are applied onto a cardboard cover material having two cardboard endboards connected with a centre strip to form the hard book cover. This operation is known as case making. Typically adhesive is applied to the cover material and the end boards are contacted with the adhesive coating. After application, the cover material is folded back over the cardboard and is held in place by the adhesive. Just after manufacture, the cover material has the tendency to spring back or unfold and return to its original flat state. In order to prevent spring back, the case making adhesive needs to have a quick high tack. At least 4 to 10 seconds of open time are needed to provide enough time for assembly. After the cover is assembled and attached to the book, changes in humidity in the book environment and changes in the adhesive due to age can result in dimensional instability, resulting in a warping or curling of the book cover.

In the past, animal glues have been used in book manufacture in steps such as cover pick up and case making operations. Animal based protein containing glues have adequate adhesive properties and have the benefits that they are moderate in cost and can be used in the cover pick up operation. Animal glues often do not seriously smear or stick to cutting means during book manufacture. However animal glues have certain drawbacks. Animal glues commonly gel at about 150°F (65.5°C). At the gel point the glue changes from a fluid to a rapidly setting gel. The gel can become an adhesive after the water in the gel is removed during evaporation, but before evaporation the gel has low tack and little adhesion. Further, animal glue tends to be subject to substantial heat degradation resulting in a short pot life. Animal glues often have an extremely short open time, and after drying can be inflexible. Further, animal glues exposed to high or low humidity can fail to be operative since, when subject to high humidity, animal glues dry much too slowly, while when subject to low humidity rapid evaporation can remove an excess of water from the glue resulting in substantial loss of adhesion and flexibility. Animal glues fail to wet many surfaces, and this can result in non-uniform bonding, and are incompatible with many substances used in book manufacture. Book covers made with animal glue can have dimensional instability in changing conditions of humidity, and can be subject to biological attack by insects and microorganisms.

Lignin sulphonates and polyvinyl alcohols have been used in many differing compositions having adhesive properties for many years. US-A-1,464,949, US-A- 3,314,807, US-A-3,395,033 and US-A-3,619,222 each teach combining lignosulphonate with animal glue to form an adhesive. US-A-2,242,601 teaches a coating composition based on an oxygenated organic solvent containing cellulose ester, lignin, plasticisers, and resins. US-A- 2,443,889, US-A-2,579,481, US-A-2,579,483, and US-A- 2,954,353 all teach adhesive compositions containing a lignin sulphonate and a polyvinyl alcohol in proportions of less than one part by weight of polyvinyl alcohol per 10 parts of lignin sulphonate. At these proportions, the compositions have some adhesive properties but simply do not possess sufficient quick tack adhesion and adaptability to be useful in many applications including book manufacture.

Accordingly, a substantial need exists for a wholly synthetic replacement for animal glue which is suitable, in particular, for use as a replacement for animal glue in paperback and hard cover book manufacture.

Accordingly, this invention provides an aqueous film-forming adhesive composition which comprises:

(a) from 25 to 75 wt-% of an aqueous phase, and

(b) 75 to 25 wt-% of a solid component, which comprises an ammonium or alkali metal lignin sulphonate and a polyvinyl alcohol, characterised in that the weight ratio of lignin sulphonate to polyvinyl alcohol is

in the range of from 1:1 to 1:8.

It has been found that an aqueous adhesive containing a lignin sulphonate and a polyvinyl alcohol, wherein there are about 1 to 8 parts of the lignin sulphonate per part of the polyvinyl alcohol, has substantially improved heat and biological stability, extended pot life, easy clean up, low odour, improved machining, elevated tack, extended open time, and a commercially attractive cost. After use, a film of the synthetic adhesives is dimensionally stable, biologically stable and flexible. The invention provides an aqueous adhesive having components that can interact and display a unique set of properties that can be adjusted or varied for a variety of applications including cover pick-up and casemaking in book manufacture.

Thus, in a second aspect there is provided a thin dimensionally stable film which consists essentially of:

(a) an ammonium and/or alkali metal lignin sulphonate;

(b) a polyvinyl alcohol; characterised in that weight ratio of the lignin sulphonate to the polyvinyl alcohol is from 1:1 to 1:8.

In the third aspect there is provided a method of laminating a first sheet to a second sheet which comprises providing a film according to the third aspect of the invention between the first sheet and the second sheet to form a non-bonded laminate and applying heat to the non-bonded laminate.

In a fourth aspect, this invention provides a method of applying a cover to a book which comprises the steps of:

(a) roughing and cutting an assembly of a sufficient number of signatures resulting in a signature assembly having a high surface area location for the application of adhesives;

(b) applying to the high surface area location a primer adhesive;

(c) applying to the primer an adhesive composition according to the first aspect of the invention to form an adherent coating; and

(d) contacting the adherent coating with a book cover,

In a fifth aspect, this invention provides a method of case making which comprises:

(a) applying to a sheet of cover material a continuous film of the adhesive composition according to the first aspect of the invention to form an adherent coating;

(b) applying to the adherent coating an assembly of two end boards connected with a centre strip; and

(c) folding the cover material over the edges of the end boards,

We do not wish to be held to a theory of action of the adhesive compositions of the invention, however it appears to us at this time that the complex sulphonate molecule interacts with the polyvinyl alcohol molecule with the novel proportions of components in the adhesive in a surprising way to produce an adhesive having unexpected and unpredictable properties. The components of the adhesive compositions of this invention, both essential and optional, will now be described in detail.

## Lignin Sulphonate

Lignin is a major constituent of wood and woody plants comprising about one quarter of the dry weight of such materials. It appears to function as a natural plastic binder for the cellulosic fibres which make up the structural units of the plant. During the pulping process lignin is made water soluble by reaction with sulphite, resulting in sulphonation. The products derived from the solubilized sulphonated lignin are referred to as lignin sulphonate. The structure of lignin sulphonate cannot be completely determined. However it appears to be a mixture of polymers containing units of aromatic rings, methoxy groups, aromatic and aliphatic hydroxyl groups and ketone and aldehyde carboxyl groups. It appears that the basic monomeric unit of lignin sulphonate is a sulphonated substituted guaiacyl propane.

Lignin sulphonates commonly contain many sulphonated compounds with a broad range of molecular weights and degrees of sulphonation. They can contain small amounts of natural sugars such as mannose, glucose, xylose, and galactose, and can contain small amounts of higher molecular weight polysaccharides. Lignin sulphonates are commonly available, from a number of commercial sources, as light brown dried powders or as viscous aqueous solutions. Lignin sulphonates have a variety of properties making them useful as dispersants, binders, sequestering (chelating) agents, flotation reagents, emulsifiers, emulsion stabilisers, water treating agents. The preferred alkali metal lignin sulphonates are the sodium lignin sulphonates.

## Polyvinyl Alcohol

Polyvinyl alcohol (PVA) is a polyhydroxy polymer having a polymethylene backbone with pendant hydroxy groups and is a water soluble synthetic resin. It is produced by the hydrolysis of polyvinyl acetate. The theoretical monomer

$$\begin{array}{c} CH_2=CH \\ \qquad\quad | \\ \qquad\quad OH \end{array}$$

does not exist. Polyvinyl alcohol is one of the very few high molecular weight commercially available polymers that is water soluble. It is commonly available as a dry solid and is available in granular or powdered form. PVA grades include both the fully hydrolysed form (99% + removal of the acetate group), a form of intermediate hydrolysis product (about 98 to 91% removal of acetate groups), and a partly hydrolysed product (about 90 to 85% removal of the acetate groups). The properties of the resins vary according to the molecular weight of the parent polymer and the degree of hydrolysis. Preferably the polyvinyl alcohols used in the practice of this invention contain from 88 to 99% of the alcohol groups free of substituents. Polyvinyl alcohols are commonly produced in nominal number average molecular weights that range from 20,000 to 100,000. Commonly the molecular weight of commercial polyvinyl alcohol grades is reflected in the viscosity of a 4 wt-% solution, measured in centipoise (cP) at 20°C with a Brookfield viscometer. The viscosity of a 4% solution can range from 5 to 65 cP. Variations in flexibility, water sensitivity, ease of solvation, viscosity, block resistance, adhesive strength, dispersing power can all be achieved by adjusting molecular weight or degree of hydrolysis. Solutions of polyvinyl alcohol in water can be made with large quantities of lower alcoholic cosolvents and salt cosolutes. Polyvinyl alcohols can react with aldehydes to form acetals, can be reacted with acrylonitrile to form cyanoethyl groups, and can be reacted with ethylene or propylene oxide to form hydroxy alkylene groups. Polyvinyl alcohols can be readily crosslinked and can be borated to effect gelation.

Polyvinyl alcohol is made by first forming polyvinyl acetate and removing the acetate groups using a base catalysed alkanolysis. The production of polyvinyl acetate can be carried out by conventional processes which controls the ultimate molecular weight. Catalyst selection temperatures, solvent selection and chain transfer agents can be used by persons skilled in the art to control molecular weight. The degree of hydrolysis is controlled by preventing the completion of the alkanolysis reaction. Polyvinyl alcohol is made in the United States by Air Products & Chemicals, Inc. under the tradename "VINOL", by duPont under the trade name "ELVANOL", and by Monsanto under the tradename "GELVITOL".

### Humectant Plasticiser

The adhesive compositions of this invention can contain a material that plasticises the mixture. Plasticisers are defined as materials incorporated into a composition that can increase its workability and flexibility or distensability. Plasticisers that can be used in the adhesive compositions of this invention are humectant plasticisers that can maintain a sufficient plasticising amount of water thus ensuring the flexibility and toughness of the adhesive film. Preferred plasticisers for use in the adhesives of this invention include hydrophilic compounds containing hydrophilic groups such as amine, amide, hydroxyl or carbonyl groups. The most preferred group of plasticisers includes polyhydroxy compounds having 2 or more hydroxyl groups and 2 or more carbon atoms. Typical examples of such plasticisers include ethylene glycol, diethylene glycol, triethylene glycol, propylene glycol, 1,2-butylene glycol, 1,4-butylene glycol, glycerine, glucose, invert sugar, glycerol monomethyl ether and polyalkylene oxides, and mixtures thereof.

### Fibre

While the adhesive compositions of this invention form high quality adhesives and can have a variety of properties depending on relative proportion of polyvinyl alcohol and lignin sulphonate, the solids content of the adhesive and the degree of hydrolysis and molecular weight of the polyvinyl alcohol, the bond strength and adhesion of the composition is improved by the addition of an effective amount of fibre. Both synthetic and natural fibres can be used. Useful synthetic fibres can be made from metal, glass, graphite, nylon, polyester, polyolefin or boron. Examples of natural fibres include wool, flax and bamboo. A preferred fibre for reasons of ease of use and utility is a cellulosic fibre. Cellulose is a carbohydrate polymer composed of glucan units having the empirical formula $C_6H_{10}O_5$. Cellulose is the chief structural element and major constituent of the cell walls of trees and other higher plants. Cellulose is generally a white fibrous material that can be separated from other constituents of the plant cell wall including lignin, hemicellulose, pectin, and others. Cellulose can be derived from a number of sources. However cellulose derived from hard or soft wood or cotton tends to have exceptional purity and performance characteristics. The preferred form of the cellulosic fibre used in the adhesives of this invention comprises elongated fibres, fibre units or fibre

bundles having dimensions of from 1 to 100 millimeters in length and a diameter of from 0.5 to 450 microns. Since cellulose is a polymer of repeating carbohydrate units having pendent hydroxyl groups, the hydroxyl groups can interact, by hydrogen bonding, with the polyvinyl alcohol compositions in the invention to increase the film strength of the adhesive. Further, the elongated cellulose particles can form a mesh imparting a substantial increase in tensile strength to the adhesive film. If the adhesive is so applied that the cellulosic fibres are oriented in their lengthwise dimension, such orientation can result in a film which has substantial resistance to elongation in the direction of the fibres while across the fibres the film has a lower tensile strength.

The adhesive compositions of this invention can also contain a variety of well known adhesive constituents including thermoplastic and thermosetting resins, natural and synthetic rubbers, boric acid and salts thereof, preservatives, anti-foaming agents, sequestering agents, emulsifiers, perfumes, dyes and pigments.

The adhesive compositions of this invention are made up in an aqueous base. The adhesive composition to be applied to a substrate contains 75 to 25 wt-% of lignin sulphonate-polyvinyl combination and 25 to 75 wt-% water. There are from 1 to 8 parts by weight, preferably 1 to 5 parts by weight, of the lignin sulphonate per part of the polyvinyl alcohol. With substantially greater than 8 parts by weight of the lignin sulphonate per part of the polyvinyl alcohol, the tack of the adhesive is not sufficiently strong to result in successful adhesion in many applications. Preferably, the adhesive composition comprises from 30 to 55 wt-% lignin-sulphonate-polyvinyl alcohol combination, and contains from 2 to 5 parts by weight of the lignin sulphonate per part by weight of the polyvinyl alcohol for reasons of ease of preparation and enhanced adhesive properties. With high solids adhesives, at proportions of greater than about equal parts by weight of polyvinyl alcohol and lignin sulphonate, the adhesive tends to increase in viscosity such that it is difficult to handle and apply. The adhesive compositions are then often unable to maintain sufficiently long open time to be useful in all adhesive applications.

A particularly preferred adhesive composition for application to a substrate is one wherein the ammonium or alkali metal lignin sulphonate is present in an amount of from 10 to 45 parts by weight of the sulphonate(s) per 100 parts by weight of the adhesive composition and the polyvinyl alcohol is present in a concentration of from 7 to 40 parts by weight of polyvinyl alcohol per 100 parts by weight of the aqueous composition.

The aqueous adhesive compositions of the invention for application to a substrate can have a viscosity that falls in a broad range of from 2,500 to 100,000 cP, depending on the percent solids and the ratio of lignin sulphonate to polyvinyl alcohol.

The adhesive composition of the invention to be made up into an aqueous adhesive composition for application to a substrate can contain an amount of the humectant-plasticiser which provides from 2 to 10 wt-% of the plasticiser in the fully compounded aqueous adhesive. Preferably, the adhesive composition contains a polyhydroxy plasticiser compound in a concentration of from 2 to 10 wt-%, and more preferably, the adhesive composition contains an ethylene glycol, glycerine, or polyalkylene oxide plasticiser in a concentration of from 3 to 10 wt-%.

The aqueous adhesive compositions of the invention for application to a substrate can contain the cellulosic fibres in a concentration of from 0.01 to 25 wt-% based on the fully compounded formulation. The preferred such adhesive compositions contain from 0.5 to 5 wt-% of cellulosic fibres, and more preferably, for reasons of strength and flexibility, such adhesive compositions contain from 1 to 5 wt-% of a cellulose fibre made from wood.

The following examples illustrate this invention:

## EXAMPLE I

100 grams of a 50 wt-% dispersion of an ammonium lignin sulphonate (ORZAN AL-50, IIT Rayonier Forest Products) were placed into a 600 millilitre stainless steel beaker having an electrically driven blade mixer and immersed in a water bath at 210°F (99°C). The mixer was started and 20 grams of a partially hydrolysed low molecular weight polyvinyl alcohol (87.0-89.0% hydrolysed - a 4% aqueous solution of the PVOH having a viscosity of 4 to 6 cP, VINOL 205 Air Products & Chemicals, Inc.) were sprinkled gradually into the agitated liquid at a rate to permit smooth addition. The addition took about 1 hour, and after the addition was completed the mixture was agitated until smooth, indicating the dissolution of all the polyvinyl alcohol. At the end of the dissolution, the temperature of the mixture was about 195°F (90°C). The product had 65% by weight total solids.

A series of products was prepared by diluting the product with a total of eighteen 5 millilitre aliquots of water resulting in products having total solids content ranging from 58 wt-% solids to 35 wt-% solids.

EXAMPLE II

Example I was repeated except that a mixture of 75 grams of ammonium lignin sulphonate (AL-50) and 25 grams of a 50 wt-% aqueous solution of a sodium lignin sulphonate (ORZAN SL-50, ITT Rayonier Forest Products) was used in place of the 100 grams of AL-50.

EXAMPLE III

Example II was repeated except that 25 grams of AL-50 and 75 grams of SL-50 were used in place of 75 grams of AL-50 and 25 grams of SL-50.

EXAMPLE IV

1000 g of a 50 wt-% aqueous solution of an ammonium lignin sulphonate (ORZAB AL-50, ITT Rayonier Forest Products) were placed in a 2,000 millilitre stainless steel beaker equipped with an electrically driven blade mixer immersed in a water bath at 210°F (99°C). Stirring was initiated and 200 grams of a partially hydrolyzed low molecular weight polyvinyl alcohol (87-89% hydrolyzed - a 4 wt-% aqueous solution which had a viscosity of about 4 to 6 cP at 20°C, VINOL 205, Air Products & Chemicals, Inc.,) were slowly added to the stirred liquid. During the addition of the polyvinyl alcohol the solution began to generate foam and about 10 millilitres of Dow FG-10 anti-foaming agent were added. The completion of the addition of the balance of the polyvinyl alcohol occurred in about 1/2 hour and the mixture was agitated until smooth, which was after about 1 hour. At the end of dissolution, the temperature of the mixture was about 195°F (90°C). The product had about 58 wt-% solids content.

EXAMPLE V

Example IV was repeated, except that 140 grams of the VINOL 205 were used in place of 200 grams of VINOL 205.

EXAMPLE VI

Example IV was repeated, except that after the addition of the VINOL 205, 50 grams of boric acid and 7 grams of citric acid were added to the mixture which was agitated until smooth.

EXAMPLE VII

Example VI was repeated, except that 200 grams of boric acid and 28 grams of citric acid were used instead of 50 grams of boric acid and 7 grams of citric acid.

EXAMPLE VIII

Example II was repeated except that after the addition of the polyvinyl alcohol VINOL 205, 1000 grams of an approximately 55 wt-% aqueous emulsion of a polyvinyl acetate homopolymer having a Brookfield viscosity at 20 r.p.m. at 25°C of about 14,000 to 18,000 cP. (FULATEX PD-347) were added.

EXAMPLE IX

Example VIII was repeated except that 1,000 grams of a 47 wt-% dispersion of a carboxylated copolymer of chloroprene and methacrylic acid having a minor amount of a polyvinyl alcohol dispersing agent (a NEOPRENE latex 115) were substituted for the PD-347.

EXAMPLE X

200 grams of water and 80.0 grams of a partially hydrolysed low molecular weight polyvinyl alcohol (87-89 hydrolyzed - a 4 wt-% aqueous solution of the polvyinyl alcohol having a viscosity at 20°C of about 4 to 6 cP VINOL 205, Air Products & Chemicals, Inc.) were placed in a 1,000 millilitre stainless steel beaker. The polyvinyl alcohol solid was mixed with water for 10 minutes at ambient temperature and at the end of that period the mixture was placed in a water bath at about 200°F (93.33°C) for 50 minutes under stirring using

an electrically driven blade mixer. At the end of this time the VINOL had essentially completely dissolved in the aqueous phase. 1.5 grams of Dow A preservative, 1.0 grams of DREW Y 384 anti-foaming agent, and 145.0 grams of solid ammonium lignin sulphonate (ORZAN A) were added to the VINOL 205 solution at 200°F (93.33°C). The mixture was agitated until smooth and 22.5 grams of a 60 wt-% titanium dioxide pigment dispersion in water and 50 grams of glycerine (DARCHEM 88 were added to the mixture. The resulting mixture was blended until uniform. The finished adhesive had a viscosity at 160°F (71.1°C) of 7500 cP. The mixture was diluted until it contained 44 wt-% total solids and had a viscosity of 5300 cP.

EXAMPLE XI

182.5 grams of water and 72.5 grams of a partially hydrolysed polyvinyl alcohol composition (87-89% hydrolysed and a 4 wt-% aqueous solution having a viscosity at 20°C of about 4-6 CP were placed in a 1,000 millilitre stainless steel beaker. The VINOL mixture was agitated for 10 minutes and then placed in a water bath at 200°F (93.33°C) under stirring using an electrically driven blade mixer for 15 minutes. At the end of the period substantially all the VINOL 205 had been dissolved and 1.5 grams of DREW Y 384 anti-foaming agent, 1.0 grams of Dow A preservative, 22.5 grams of a 60 wt-% dispersion of titanium dioxide pigment in water, 70 grams of ammonium lignin sulphonate (ORZAN A), 105 grams of sodium lignin sulphonate (ORZAN S) and 45 grams of glycerine (DARCHEM 88) were added to the solution. The mixture was agitated at 210°F (99°C) until smooth (about 30 minutes). The final adhesive composition was diluted with water until its 160°F (71.1°C) viscosity was 550 cP. The final adhesive composition had a solids content of 44.9 wt-%.

EXAMPLE XII

188 grams of water, 71.5 grams of a polyvinyl alcohol (87-89% hydrolysed, a 4 wt-% aqueous solution having a viscosity at 20°C of about 4 to 6 cP, VINOL 205, Air Products & Chemicals, Inc.) and 1.0 grams of DREW Y-384 anti-foaming agent were placed in a 1,000 millilitre stainless steel beaker. The mixture was thoroughly dispersed in cold water and then placed on a hot water bath at about 200°F (93.3°C) and was mixed with an electrically driven mixer having a blade agitator for 30 minutes. 1.5 grams of Dow A preservative and 188 grams of an ammonium lignin sulphonate (ORZAN A) along with 50 grams glycerine (DARCHEM 88) were added to the heated mixed solution. The mixture was agitated until smooth. The finished adhesive composition was diluted to 43.5 wt-% total solids content and had a viscosity profile as follows:

| Viscosity | Temperature |
|---|---|
| 2600 cP | 170°F. (76.7°C) |
| 3900 cP | 160°F. (71.1°C) |
| 5300 cP | 150°F. (65.6°C) |

EXAMPLE XIII

45 lbs. (20.43 kg) of a 50 wt-% aqueous solution of an ammonium lignin sulphonate (ORZAN AL-50, ITT Rayonier Forest Products), 0.45 lbs. (0.20 kg) of DOW A, a preservative, 0.3 lbs (0.14 kg) of DREW Y 384, an anti-foaming agent, and 20.7 lbs (9.40 kg) of a partially hydrolysed low molecular weight polyvinyl alcohol (87.0-89.0% hydrolysis of a 4% aqueous solution having a viscosity at 20°C of about 4 to 6 cP, VINOL 205, Air Products & Chemicals, Inc.) were charged to a 15-gallon (68.4 litre) horizontal single blade ribbon mixer equipped with direct steam and steam jacket heating and variable speed mixing. The mixture was agitated at 15 r.p.m. until the components began to be wetted out and the agitation was increased to 30 r.p.m. The mixture was heated with direct steam and jacket steam to 170°F (76.7°C) at which time supply of the direct steam was terminated and jacket steam was continued until the mixture reached 190°F (87.8°C). Fifteen lbs. (6.81 kg) of the 50 wt-% ammonium lignin sulphonate composition were added to the mixture and the supply of jacket steam was restarted and continued until the mixture reachd 190°F (87.8°C). The mixture was maintained at that temperature for 45 minutes at 50 revolutions per minute to cause the dissolution of the polyvinyl alcohol in the adhesive composition. A premix of 14.4 lbs. (6.54 kg) of glycerine (DURACHEM 88), 6.75 lbs (3.06 kg) of the 50 wt-% aqueous solution of ammonium lignin sulphonate, 11.25 lbs. (5.11 kg) of a solid particulate sodium lignin sulphonate (ORZAN S), and 0.075 lbs (0.034 kg) of DREW

Y-384 anti-foaming agent was prepared separately in a 5 gallon (22.8 litre) bucket by hand. The pre-mix was agitated with a hand-held electrical drill-driven mixer until smooth and was added to the batch in the horizontal ribbon mixer. The mixture was reheated to 190°F (87.8°C) and mixed for 15 minutes to uniformity. 30 lbs. (13.62 kg) of an aqueous 50 wt-% solution of ammonium lignin sulphonate (ORZAN AL-50), along with 0.075 lbs. (0.034 kg) of the DREW Y-384 anti-foaming agent were added to the mixed uniform mixture. The mixture was mixed until smooth and was drawn off into 5 gallon (12.8 litre) pails. The composition contained 69 wt-% solids and had a Brookfield viscosity of 13,000 cP at 140°F (60°C).

EXAMPLE XIV

185 grams of water and 5 grams of finely divided hardwood-pulp were charged to a 600 millilitre beaker mixer. 80 grams of a polyvinyl alcohol (degree of hydrolysis 87-89%, low molecular weight, viscosity of a 4% aqueous solution about 4 to 6, VINOL 205, Air Products and Chemicals, Inc.) were added to the suspension of pulp in water. The hardwood-pulp, polyvinyl alcohol mixture was agitated at 180-200°F (82.2-93.3°C) until uniform and 175 grams of a sodium lignin sulphonate (ORZAN A-ITT Rayonier) were slowly added to the stirred heated mixture. The mixture was agitated while undergoing heating until smooth and 55 grams of glycerine (DURACHEM 88) were added to the smooth agitated mixture. The adhesive composition obtained contained 60% solids and had a viscosity of 60,000 cP at 120°F (48.9°C).

The products of the above-described Examples were evaluated for quick tack, wet or green tack, speed of set, open time, and bond strength by drawing a film of the adhesive compositions having a thickness of 2.5-8 mils (63.5 - 203.2 µm) wet on an either ambient temperature or heated glass plate and applying to the coating a substrate. In all cases, the adhesive composition was superior to animal glues in these characteristics.

The adhesive compositions were evaluated for pot life by maintaining a stainless steel beaker containing 500 grams of the adhesive at 190°F (87.8°C) for 4 days. Water loss by evaporation was repeatedly replaced and no appreciable loss in viscosity, quick tack, green tack, speed of set, open time, or bond strength was apparent, indicating the thermal stability of the adhesive composition.

Adhesive compositions embodying this invention can be used in virtually any application involving a water based adhesive used at elevated temperatures within a viscosity range of 2,000 to 100,00 cP. However, these adhesive compositions are preferred for use in the manufacture of hard back and soft cover books; soft cover books include paper back books, catalogues, telephone directories, magazines and text books. In the assembly of these books, signatures are prepared which are 10 to 30 page folded groups of paper. Sufficient signatures, for example 2 to 100 or more, can be stacked to form a rough unfinished book. The folded ends are roughed and cut to form a high surface area location for the application of adhesives. An aqueous dilute primer is applied to the rough cut area. The novel composition of this invention is applied to the primer. The adhesive can be applied in any useful fashion using for example roller coating or spray coating to form an adhesive film of 0.1 to 100 mils (2.54 to 2540 µm) in thickness. The layer of adhesive having quick tack and substantial adhesion is brought into contact with the book cover. The quick tack properties of the adhesive can hold the cover to the backbone of the book until the book assembly can be clamped and trimmed to its final form. The adhesive commonly used in this application has a viscosity ranging from 12,000 to 100,000 cP.

In case making, a hard back book cover is prepared by forming a film of the adhesive between the cardboard interior of the book cover and the cover material. The cover material is folded over the back of the endboards and the adhesive holds the cover material in place. However the bent cover material is resilient and tends to spring back to its original shape. The case making adhesive requires quick tack and strong adhesion to maintain the cover material fold, preventing spring back. Further, after drying the adhesive must be dimensionally stable to prevent cover warpage. Case making adhesives commonly have a viscosity in the range of from 2,000 to 10,000 cP at 160°F (71.1°C).

The adhesive of this invention can be formed into films that can be subjected to a variety of tape splicing and lamination procedures. The adhesive can be extruded or cast into films having a thickness of from 1 to 50 mils (25.4 to 1270 µm). The cast film can be cut into shape including strips and dots. In use they can be placed between sheet-like substrates in a splicing or laminating operation and activated by the application of heat, moisture or combinations thereof.

## Claims

**1.** An aqueous film-forming adhesive composition which comprises:
(a) from 25 to 75 wt-% of an aqueous phase, and

(b) 75 to 25 wt-% of a solid component which comprises an ammonium or alkali metal lignin sulphonate and a polyvinyl alcohol, characterised in that the weight ratio of lignin sulphonate to polyvinyl alcohol is in the range of from 1:1 to 1:8.

**2.** The composition of Claim 1 wherein the ammonium or alkali metal lignin sulphonate is present in an amount of from 10 to 45 parts by weight of the sulphonate(s) per 100 parts by weight of the adhesive composition and the polyvinyl alcohol is present in a concentration of from 7 to 40 parts by weight of polyvinyl alcohol per 100 parts by weight of the adhesive composition.

**3.** The composition of Claim 1 or 2, wherein the polyvinyl alcohol has from 88 to 99% of the alcohol hydroxyl groups free of substituents.

**4.** The composition of any preceding claim wherein the adhesive also contains a humectant- plasticiser.

**5.** The composition of Claim 4 wherein the humectant- plasticiser is a polyhydroxy compound.

**6.** The composition of Claim 5 wherein the polyhydroxy compound is glycerine.

**7.** The composition of any preceding claim, which contains a bond strength improving amount of cellulosic fibres.

**8.** The composition of Claim 7 wherein the cellulosic fibres are wood pulp fibres, cotton fibres or mixtures thereof.

**9.** A thin dimensionally stable film which consists essentially of:
(a) an ammonium or alkali metal lignin sulphonate; and
(b) a polyvinyl alcohol; and is characterised by there being from 1 to 8 parts of weight of lignin sulphonate per part by weight of the polyvinyl alcohol.

**10.** A thin film of claim 9, which additionally contains cellulosic fibres in an amount of from 0.1 to 10 wt-% .

**11.** The film of Claim 10, wherein the cellulosic fibres are wood pulp fibres, cotton fibres or mixtures thereof.

**12.** The thin film of claim 9, 10 or 11, which also contains a humectant-plasticiser.

**13.** The film of claim 12, wherein the humectant-plasticiser is a polyhydroxy compound.

**14.** A method of laminating a first sheet to a second sheet which comprises providing a film as claimed in any one of claims 9 to 13 between the first sheet and the second sheet to form a non-bonded laminate and applying heat to the non-bonded laminate.

**15.** A method of applying a cover to a book which comprises the steps of:
(a) roughing and cutting an assembly of a sufficient number of signatures resulting in a signature assembly having a high surface area location for the application of adhesives;
(b) applying to the high surface area location a primer adhesive;
(c) applying to the primer an adhesive composition as claimed in any one of claims 1 to 8, to form an adherent coating; and
(d) contacting the adherent coating with a book cover.

**16.** A method of case making which comprises:
(a) applying to a sheet of cover material a continuous film of the adhesive composition claimed in any one of claims 1 to 6 to form an adherent coating;
(b) applying to the adherent coating an assembly of two end boards connected with a centre strip; and
(c) folding the cover material over the edges of the end boards.

**Revendications**

1. Une composition adhésive filmogène aqueuse, qui comprend;
   [a] de 25 à 75% en poids d'une phase aqueuse, et
   [b] 75 à 25% en poids d'un composant solide qui comprend un lignine sulfonate d'ammonium ou de métal alcalin et un alcool polyvinylique, caractérisée en ce que le rapport pondéral du lignine sulfonate à l'alcool polyvinylique est de l'ordre de 1/1 à 1/8.

2. La composition suivant la revendication 1, dans laquelle le lignine sulfonate d'ammonium ou de métal alcalin est présent en une quantité de 10 à 45 parties en poids du ou des sulfonates pour 100 parties en poids de la composition adhésive et l'alcool polyvinylique est présent en une concentration de 7 à 40 parties en poids d'alcool polyvinylique pour 100 parties en poids de la composition adhésive.

3. La composition suivant la revendication 1 ou la revendication 2, dans laquelle 88 à 99% des groupes hydroxy alcooliques de l'alcool polyvinylique sont exempts de substituants.

4. La composition suivant l'une quelconque des revendications précédentes, dans laquelle l'adhésif contient aussi un humectant-plastifiant.

5. La composition suivant la revendication 4, dans laquelle l'humectant-plastifiant est un composé polyhydroxy.

6. La composition suivant la revendication 5, dans laquelle le composé polyhydroxy est la glycérine.

7. La composition suivant l'une quelconque des revendications précédentes, qui contient une quantité de fibres cellulosiques améliorant la solidité de la liaison.

8. La composition suivant la revendication 7, dans laquelle les fibres cellulosiques sont des fibres de pulpe de bois, des fibres de coton ou leurs mélanges.

9. Un mince film dimensionnellement stable, qui consiste essentiellement en:
   [a] un lignine sulfonate d'ammonium ou de métal alcalin; et
   [b] un alcool polyvinylique; et est caractérisé par la présence de 1 à 8 parties en poids de lignine sulfonate par partie en poids de l'alcool polyvinylique.

10. Le film suivant la revendication 9, que contient de plus des fibres cellulosiques en une quantité de 0,1 à 10% en poids.

11. Le film suivant la revendication 10, dans lequel les fibres cellulosiques sont des fibres de pulpe de bois, des fibres de coton ou leurs mélanges.

12. Le film mince suivant les revendications 9, 10 ou 11, qui contient aussi un humectant-plastifiant.

13. Le film suivant la revendication 12, dans lequel l'humectant-plastifiant est un composé polyhydroxy.

14. Une procédé pour feuilleter une première feuille sur une seconde feuille qui comprend la fourniture d'un film suivant l'une quelconque des revendications 9 à 13 entre la première feuille et la seconde feuille de façon à former un feuilleté non lié et l'application de chaleur au feuilleté non lié.

15. Une procédé pour appliquer une couverture sur un livre, qui comprend les étapes de :
   [a] ébarbage et découpe d'un asemblage d'un nombre suffisant de signatures aboutissant à un assemblage de signatures ayant un emplacement de grande aire superficielle pour l'application d'adhésifs;
   [b] application d'un adhésif d'apprêt sur l'emplacement de grande aire superficielle;
   [c] application sur l'apprêt d'une composition adhésive suivant l'une quelconque des revendications 1 à 8 pour former un revêtement adhérent; et
   [d] mise en contact du revêtement adhérent avec une couverture de livre.

16. Un procédé pour fabriquer une couverture, qui comprend:

[a] l'application sur une feuille de matériau de couverture d'un film continu d'une composition adhésive suivant l'une quelconque des revendications 1 à 6 pour former un revêtement adhérent;
[b] l'application sur le revêtement adhérent d'un assemblage de deux cartons terminaux raccordés par une bande au centre; et
[c] le pliage du matériau de couverture sur les bords des cartons terminaux.

**Patentansprüche**

1. Wäßrige filmbildende Klebemittelzusammensetzung, die folgendes umfaßt:
(a) 25 bis 75 Gew.-% einer wäßrigen Phase, und
(b) 75 bis 25 Gew.-% einer festen Komponente, die ein Ammonium- oder Alkalimetall-Ligninsulfonat und einen Polyvinylalkohol umfaßt, dadurch gekennzeichnet, daß das Gewichtsverhältnis von Ligninsulfonat und Polyvinylalkohol im Bereich von 1:1 bis 1:8 liegt.

2. Zusammensetzung nach Anspruch 1, worin das Ammonium- oder Alkalimetall-Ligninsulfonat in einer Menge von 10 bis 45 Gew.-Teilen des Sulfonats bzw. der Sulfonate pro 100 Gew.-Teile der Klebemittelzusammensetzung vorliegt, und der Polyvinylalkohol in einer Konzentration von 7 bis 40 Gew.-Teilen Polyvinylalkohol pro 100 Gew.-Teile Klebemittelzusammensetzung vorliegt.

3. Zusammensetzung nach Anspruch 1 oder 2, worin bei dem Polyvinylalkohol 88 bis 99 % der alkoholischen Hydroxylgruppen frei von Substituenten sind.

4. Zusammensetzung nach einem der vorhergehenden Ansprüche, worin das Klebemittel auch einen Netzmittel-Weichmacher enthält.

5. Zusammensetzung nach Anspruch 4, worin der Netzmittel-Weichmacher eine Polyhydroxy-Verbindung ist.

6. Zusammensetzung nach Anspruch 5, worin die Polyhydroxy-Verbindung Glyzerin ist.

7. Zusammensetzung nach einem der vorhergehenden Ansprüche, welche einen Gehalt an Cellulosefasern enthält, die die Bindefestigkeit verbessern.

8. Zusammensetzung nach Anspruch 7, worin die Cellulosefasern Holzschliffasern, Baumwollfasern oder Mischungen davon sind.

9. Dünner, dimensional stabiler Film, der im wesentlichen aus folgendem besteht:
(a) einem Ammonium- oder Alkalimetall-Ligninsulfonat; und
(b) einem Polyvinylalkohol;
und dadurch gekennzeichnet ist, daß 1 bis 8 Gew.-Teile Ligninsulfonat pro Gew.-Teil Polyvinylalkohol vorliegen.

10. Dünner Film nach Anspruch 9, der zusätzlich Cellulosefasern in einer Menge von 0,1 bis 10 Gew.-% enthält.

11. Dünner Film nach Anspruch 10, worin die Cellulosefasern Holzschliffasern, Baumwollfasern oder Mischungen davon sind.

12. Dünner Film nach Anspruch 9, 10 oder 11, der auch einen Netzmittel-Weichmacher enthält.

13. Film nach Anspruch 12, worin der Netzmittel-Weichmacher eine Polyhydroxy-Verbindung ist.

14. Verfahren zur Laminierung einer ersten Schicht auf eine zweite, welches die Aufbringung eines Filmes gemäß einem der Ansprüche 9 bis 13 zwischen der ersten Schicht und der zweiten Schicht zur Bildung eines nicht-gebundenen Laminats sowie das Erwärmen des nicht-gebundenen Laminats umfaßt.

15. Verfahren zur Anbringung eines Deckels an einem Buch, welches folgende Schritte umfaßt:
(a) Aufrauhen und Schneiden eines Stapels einer ausreichenden Anzahl von Lagen, woraus sich ein

Lagenstapel mit erhöhtem Oberflächenbereich für das Aufbringen von Klebemitteln ergibt;
(b) Aufbringen eines Grundier-Klebemittels auf dem erhöhtem Oberflächenbereich;
(c) Aufbringen einer Klebemittelzusammensetzung auf dem Grundierkleber gemäß einem der Ansprüche 1 bis 8, um eine haftende Beschichtung zu erhalten; und
(d) Zusammenfügen der haftenden Beschichtung und des Buchdeckels.

**16.** Verfahren zur Herstellung von Einbänden, folgendes umfassend:
(a) Aufbringen eines kontinuierlichen Filmes der Klebemittelzusammensetzung gemäß einem der Ansprüche 1 bis 6 auf einer Schicht Deckmaterial, um eine haftende Beschichtung zu erhalten;
(b) Aufbringen eines Stapels zweier mit einem Mittelstreifen verbundener Endkartons auf der haftenden Beschichtung; und
(c) Falten des Deckmaterials über den Kanten der Endkartons.